(19) Europäisches Patentamt
European Patent Office
Office européen des brevets

(11) EP 1 274 576 B1

(12) EUROPÄISCHE PATENTSCHRIFT

(45) Veröffentlichungstag und Bekanntmachung des Hinweises auf die Patenterteilung:
**12.01.2005 Patentblatt 2005/02**

(21) Anmeldenummer: **01903636.7**

(22) Anmeldetag: **10.01.2001**

(51) Int Cl.7: **B32B 27/36**, C08L 67/02

(86) Internationale Anmeldenummer:
**PCT/EP2001/000209**

(87) Internationale Veröffentlichungsnummer:
**WO 2001/053087 (26.07.2001 Gazette 2001/30)**

(54) **MATTE, UV-STABILE, THERMOFORMBARE, KOEXTRUDIERTE POLYESTERFOLIE, VERFAHREN ZU IHRER HERSTELLUNG UND IHRE VERWENDUNG**

MATT, UV-STABLE, THERMOFORMABLE, CO-EXTRUDED POLYESTER FILM, A METHOD FOR THE PRODUCTION THEREOF AND THE USE OF THE SAME

FEUILLE DE POLYESTER COEXTRUDEE, THERMOFORMABLE, STABLE AUX RAYONS ULTRAVIOLETS ET MATE, SON PROCEDE DE PRODUCTION ET SON UTILISATION

(84) Benannte Vertragsstaaten:
**DE FR GB IT LU**

(30) Priorität: **20.01.2000 DE 10002169**

(43) Veröffentlichungstag der Anmeldung:
**15.01.2003 Patentblatt 2003/03**

(73) Patentinhaber: **Mitsubishi Polyester Film GmbH**
**65203 Wiesbaden (DE)**

(72) Erfinder:
- **MURSCHALL, Ursula**
  **55283 Nierstein (DE)**
- **KERN, Ulrich**
  **55218 Ingelheim (DE)**
- **CRASS, Günther**
  **65232 Taunusstein (DE)**

(74) Vertreter: **Schweitzer, Klaus, Dr. et al**
**Patentanwaltskanzlei Zounek**
**Industriepark Kalle-Albert**
**Gebäude H391**
**Rheingaustrasse 190-196**
**65174 Wiesbaden (DE)**

(56) Entgegenhaltungen:
**EP-A- 0 144 878**
**EP-A- 0 584 044**
**EP-A- 0 587 148**
**EP-A- 0 976 548**
**US-A- 5 073 435**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).



Printed by Jouve, 75001 PARIS (FR)

## Beschreibung

Die Erfindung betrifft eine Koextrudierte, biaxial orientierte und thermoformbare Polyesterfolie, welche eine Basisschicht (B) aus einem thermoplastischen, kristallisierbaren Polyester mit einem Diethylenglykol oder einem Polyethylenglykolgehalt von ≥ 1 Gew.-% und mindestens eine matte Deckschicht und gegebenenfalls weitere Zwischenschichten aufweist, und mindestens einen UV-Absorber enthält, der aus der Gruppe 2-Hydroxybenzotriazole oder Triazine oder Mischungen von diesen ist und wobei die Gesamtkonzentration an Lichtschutzmitteln zwischen 0,01 und 5 Gew.-% liegt, bezogen auf das Gewicht an kristallisierbarem Polyethylenterephthalat, wobei die matte Deckschicht eine Mischung und/oder ein Blend aus zwei Komponenten I und II enthält, wobei die Komponente I im wesentlichen ein Polyethylenterephthalat-Homopolymer oder Polyethylenterephthalat Copolymer oder eine Mischung aus Polyethylenterephthalat-Homopolymer oder Polyethylenterephthalat Copolymeren ist und die Komponente II ein Polyethylenterephthalat-Copolymer ist aus Isophthalsäure, ggf. aliphatischer Dicarbonsäure, Sulfomonomerem, das eine Metallsulfonatgruppe an dem aromatischen Teil einer aromatischen Dicarbonsäure enthält, und aliphatischem oder cycloaliphatischem Glykol. Die Erfindung betrifft weiterhin ein Verfahren zur Herstellung der Folie und ihre Verwendung.

Die Komponente I der Mischung bzw. des Blends ist ein Polyethylenterephthalat-Homopolymer oder Polyethylenterephthalat-Copolymer oder eine Mischung aus Polyethylenterephthalat Homo- und/oder Copolymeren.

Die Komponente II der Mischung bzw. des Blends ist ein Polyethylenterephthalat-Copolymer, welches aus dem Kondensationsprodukt der folgenden Monomeren bzw. deren zur Bildung von Polyestern befähigten Derivaten besteht: Isophthalsäure, aliphatische Dicarbonsäure, Sulfomonomeres, das eine Metallsulfonatgruppe an dem aromatischen Teil einer aromatischen Dicarbonsäure enthält, und aliphatisches oder cycloaliphatisches Glykol.

Die Deckschicht zeichnet sich durch eine matte Oberfläche bzw. Optik aus. Die erfindungsgemäße Folie ist für die Verwendung als Verpackungsfolie oder als Formkörper oder für Anwendungen im industriellen Sektor gut geeignet, bei denen insbesondere ein UV-Schutz bzw. eine nicht Durchlässigkeit des UV-Lichtes gefordert wird.

Die Industrie hat einen hohen Bedarf an transparenten, hochglänzenden Kunststofffolien, wie z.B. biaxial orientierte Polypropylen- oder biaxial orientierte Polyesterfolien. Daneben besteht in zunehmendem Maße ein Bedarf an solchen transparenten Folien und Formkörpem, bei denen ein Schutz vor ultravioletter Strahlung gegeben und bei denen zumindest eine Oberflächenschicht nicht hochglänzend ist, sondern sich durch ein charakteristisches mattes Erscheinungsbild auszeichnet und dadurch z.B. der Anwendung bzw. den Formkörpern ein besonderes attraktives und damit werbewirksames Aussehen und einen Schutz vor UV-Strahlung verleiht.

In der **EP 346 647** wird eine biaxial orientierte Polyesterfolie beschrieben, die mindestens eine Deckschicht enthält, die einen Füllstoff in einer Konzentration von 0,5 bis 50 % enthält, wobei der Durchmesser dieses Füllstoffes in einem bestimmten Verhältnis zur Schichtdicke der Deckschicht steht. Weiterhin weist die Deckschicht eine bestimmte Dicke und einen bestimmten Kristallisationsgrad auf, der mit Hilfe der Raman-Spektroskopie ermittelt wird.

In der **US 4,399,179** wird eine koextrudierte biaxial orientierte Polyesterfolie beschrieben, die aus einer transparenten Basisschicht und mindestens einer matten Schicht besteht, welche im wesentlichen aus einem bestimmten Polyethylenterephthalat-Copolymer besteht und zudem innerte Partikel mit einem Durchmesser von 0,3 bis 20 µm in einer Konzentration von 3 bis 40 % enthält. Das spezielle Copolymer ist eine Verarbeitungshilfe, durch die die Viskosität derdie innerten Partikeln enthaltenen Schmelze herabgesetzt wird, so dass eine einwandfreie Extrusion dieser Schicht möglich ist. Die Mattheit der Folie wird durch Zugabe der innerten Partikel in die entsprechende Schicht erreicht. Durch die Partikel wird die Transparenz beeinträchtigt.

In der **EP 0 144 978** wird eine selbstragende orientierte Folie aus thermoplastischem Kunststoff beschrieben, welche auf wenigstens einer ihrer beiden Oberflächen eine durchgehende Polyesterbeschichtung trägt, die als wässrige Dispersion auf die Folie vor dem letzten Streckschritt aufgebracht wird. Die Polyesterbeschichtung besteht aus einem Kondensationsprodukt von verschiedenen Monomeren, bzw. deren zur Bildung von Polyestern befähigten Derivaten, wie Isophthalsäure, aliphatische Dicarbonsäure, Sulfomonomere und aliphatisches oder cycloaliphatisches Glykol.

In der EP-A-0 620 245 sind Folien beschrieben, die hinsichtlich ihrer thermischen Stabilität verbessert sind. Diese Folien enthalten Antioxidationsmittel, welche geeignet sind, in der Folie gebildete Radikale abzufangen und gebildetes Peroxid abzubauen. Ein Vorschlag, wie die UV-Stabilität solcher Folien zu verbessern sei, ist dieser Schrift jedoch nicht zu entnehmen.

In dem beschriebenen Stand der Technik finden sich keine Hinweise dafür, dass die Folien thermoformbar sind, wie der Folie zumindest auf einer Folienoberfläche ein niedriger Glanz bei einer weiterhin hohen Transparenz verliehen werden kann, und dass die Folie das UV-Licht absorbiert und dass sie die Folie eine hohe UV-Stabilität aufweist.

Aufgabe der vorliegenden Erfindung war es deshalb, eine koextrudierte biaxial orientierte und transparente Polyesterfolie mit mindestens einermatten Deckschicht zur Verfügung zu stellen, die sich einfach und wirtschaftlich herstellen läßt, die die guten physikalischen Eigenschaften der bekannten Folien besitzt und sich darüber hinaus insbesondere durch die Absorption des UV-Lichtes und durch eine hohe UV-Stabilität sowie durch eine gute Thermoformbarkeit auszeichnet. Weiterhin sollte die Folie keine Entsorgungsprobleme verursachen.

Gelöst wird die Aufgabe durch eine biaxial orientierte Polyesterfolie mit dem eingangs erwähnten Aufbau bzw. Zusammensetzung.

Eine hohe UV-Stabilität bedeutet, dass die Folien durch Sonnenlicht oder andere UV-Strahlung nicht oder nur extrem wenig geschädigt werden, so dass sich die Folien für Außenanwendungen und/oder kritische Innenanwendungen eignen. Insbesondere sollen die Folien bei mehrjähriger Außenanwendungen nicht vergilben, keine Versprödungen oder Rißbildung an der Oberfläche zeigen und auch keine Verschlechterung der mechanischen Eigenschaften aufweisen. Hohe UV-Stabilität bedeutet demnach, dass die Folie das UV-Licht absorbiert und Licht erst im sichtbaren Bereich durchlässt.

Hinreichende Thermoformbarkeit bedeutet, dass sich die Folien auf handelsüblichen Tiefziehmaschinen ohne unwirtschaftliches Vortrocknen zu komplexen und großflächigen Formkörpern tiefziehen bzw. thermoformen lässt.

Zu den guten mechanischen Eigenschaften zählt unter anderem eine hoher E-Modul ($E_{MD}$ > 3200 N/mm$^2$; $E_{TD}$ > 3500 N/mm$^2$) sowie gute Reißfestigkeitswerte (in MD > 100 N/mm$^2$; in TD > 130 N/mm$^2$).

Zu der guten Verstreckbarkeit zählt, dass sich die Folie bei ihrer Herstellung sowohl in Längs- als auch ich Querrichtung hervorragend und ohne Abrisse orientieren läßt.

Unter Mischungen, besonders im Hinblick auf die Deckschicht(en), im Sinne der vorliegenden Erfindung sind mechanische Mischungen zu verstehen, welche aus den Einzelkomponenten hergestellt werden. Im allgemeinen werden hierzu die einzelnen Bestandteile als gepresste Formkörper kleiner Größe, z.B. linsen-oder kugelförmiges Granulat, zusammengeschüttet und mit einer geeigneten Rüttelvorrichtung mechanisch miteinander gemischt. Eine andere Möglichkeit für die Erstellung der Mischung besteht darin, dass die jeweiligen Komponenten I und II in Granulatform jeweils für sich getrennt dem Extruder für die erfindungsgemäße Deckschicht zugeführt werden und die Mischung im Extruder, bzw. in den nachfolgenden schmelzeführenden Systemen durchgeführt wird.

Ein Blend im Sinne der vorliegenden Erfindung ist ein legierungsartiger Verbund der einzelnen Komponenten I und II welcher nicht mehr in die ursprünglichen Bestandteilen zerlegt werden kann. Ein Blend weist Eigenschaften wie ein homogener Stoff auf und kann durch geeignete Parameter charakterisiert werden.

Erfindungsgemäß ist die Folie zumindest zweischichtig. Sie umfaßt dann als Schichten eine Basisschicht B und die erfindungsgemäße Deckschicht A. In einer weiteren bevorzugten Ausführungsform der Erfindung ist die Folie dreischichtig aufgebaut und weist auf der einen Seite der Schicht B die Deckschicht A und auf der anderen Seite der Schicht B eine weitere Schicht C auf. In diesem Fall bilden die beiden Schichten A und C die Deckschichten. Diese können gleich oder verschieden sein. Erfindungsgemäß kann der UV-Absorber und das Flammschutzmittel in der/den Deckschicht (en) und/oder der Basisschicht und/oder in den gegebenenfalls vorhandenen Zwischenschichten enthalten sein.

Die Basisschicht B der Folie besteht bevorzugt zu mindestens 70 Gew.-% aus einem thermoplastischen Polyester. Dafür geeignet sind Polyester aus Ethylenglykol und Terephthalsäure (= Polyethylenterephthalat, PET), aus Ethylenglykol und Naphthalin-2,6-dicarbonsäure (=Polyethylen-2,6-naphthalat, PEN), aus 1,4-Bis-hydroximethylcyclohexan und Terephthalsäure (= Poly-1,4-cyclohexandimethylenterephthalat, PCDT) sowie aus Ethylenglykol, Naphthalin-2,6-dicarbonsäure und Biphenyl-4,4'-dicarbonsäure (= Polyethylen-2,6-naphthalatbibenzoat, PENBB). Besonders bevorzugt sind Polyester, die zu mindestens 90 mol-%, insbesondere zu mindestens 95 mol-%, aus Ethylenglykol-und Terephthalsäure-Einheiten oder aus Ethylenglykol-und Naphthalin-2,6-dicarbonsäure-Einheiten bestehen. Die restlichen Monomereinheiten stammen aus anderen aliphatischen, cycloaliphatischen oder aromatischen Diolen bzw. Dicarbonsäuren, wie sie auch in der Schicht A (und/oder der Schicht C) vorkommen können.

Geeignete andere aliphatische Diole sind beispielsweise Diethylenglykol, Triethylenglykol, aliphatische Glykole der allgemeinen Formel $HO-(CH_2)_n-OH$, wobei n eine ganze Zahl von 3 bis 6 darstellt (insbesondere Propan-1,3-diol, Butan-1,4-diol, Pentan-1,5-diol und Hexan-1,6-diol) oder verzweigte aliphatische Glykole mit bis zu 6 KohlenstoffAtomen. Von den cycloaliphatischen Diolen sind Cyclohexandiole (insbesondere Cyclohexan-1,4-diol) zu nennen. Geeignete aromatische Diole entsprechen beispielsweise der Formel $HO-C_6H_4-X-C_6H_4-OH$, wobei X für $-CH_2-$, $-C(CH_3)_2-$, $-C(CF_3)_2-$, -O-, -S- oder $-SO_2-$ steht. Daneben sind auch Bisphenole der Formel $HO-C_6H_4-C_6H_4-OH$ gut geeignet.

Erfindungswesentlich ist, dass der kristallisierbare Thermoplast ein Diethylenglykolgehalt (DEG-Gehalt) von ≥ 1,0 Gew.%, vorzugsweise ≥ 1,2 Gew.%, insbesondere ≥ 1,3 Gew.% und/oder ein Polyethylenglykolgehalt (PEG-Gehalt) von ≥ 1,0 Gew.%, vorzugsweise ≥ 1,2 Gew.%, insbesondere ≥ 1,3 Gew.%.

Der DEG- und/oder PEG-Gehalt des Polyesters werden zweckmäßigerweise beim Rohstoffhersteller während des Polymerisationsprozesses eingestellt.

Es war mehr als überraschend, dass sich die Folien durch ein im Vergleich zum Standardthermoplasten höheren Diethylenglykolgehalt und/oder Polyethylenglykolgehalt wirtschaftlich auf handelsüblichen Tiefziehanlagen thermoformen lassen und eine hervorragende Detailwiedergabe liefern.

Andere aromatische Dicarbonsäuren sind bevorzugt Benzoldicarbonsäuren, Naphthalindicarbonsäuren (beispielsweise Naphthalin-1,4-oder 1,6-dicarbonsäure}, Biphenyl-x,x'-dicarbonsäuren (insbesondere Biphenyl-4,4'-dicarbonsäure), Diphenylacetylen-x,x'-dicarbonsäuren (insbesondere Diphenylacetylen-4,4'-dicarbonsäure) oder Stilben-x,x'-dicarbonsäuren. Von den cycloaliphatischen Dicarbonsäuren sind Cyclohexandicarbonsäuren (insbesondere Cyclohexan-1,4-dicarbonsäure) zu nennen. Von den aliphatischen Dicarbonsäuren sind die ($C_3$-$C_{19}$) Alkandisäuren besonders geeignet, wobei der Alkanteil geradkettig oder verzweigt sein kann.

Die Herstellung der erfindungsgemäßen Polyester kann z.B. nach dem Umesterungsverfahren erfolgen. Dabei geht man von Dicarbonsäureestem und Diolen aus, die mit den üblichen Umesterungskatalysatoren, wie Zink-, Calcium-, Lithium-, Magnesium- und Mangan-Salzen, umgesetzt werden. Die Zwischenprodukte werden dann in Gegenwart allgemein üblicher Polykondensationskatalysatoren, wie Antimontrioxid oder Titan-Salzen, polykondensiert. Die Herstellung kann ebenso gut nach dem Direktveresterungsverfahren in Gegenwart von Polykondensationskatalysatoren erfolgen. Dabei geht man direkt von den Dicarbonsäuren und den Diolen aus (Kunststoff Handbuch Bd. VIII, Polyester, Carl Hanser Verlag München).

Mindestens eine matte Deckschicht der erfindungsgemäßen Mehrschichtfolie enthält eine im folgenden näher beschriebene Mischung bzw. ein Blend aus zwei Komponenten I und II und gegebenenfalls zugesetzte Additive.

Die Komponente I der Deckschichtmischung bzw. des Blends enthält im wesentlichen einen thermoplastischen Polyester, insbesondere einen solchen Polyesterwie er für die Basisschicht näher beschrieben wurde. Für die Erzeugung hoher Mattgrade hat es sich dabei als günstig erwiesen, wenn das Polyesterpolymere für die Komponente I der Deckschicht eine an sich vergleichsweise geringe Viskosität aufweist. Für die Beschreibung der Viskositäten der Schmelzen wird eine modifizierte Lösungsmittelviskosität (SV-Wert oder "standard viscosity") verwendet. Für handelsübliche Polyethylenterephthalate, die sich zur Herstellung von biaxial orientierten Folien eignen, liegen die SV-Werte im Bereich von 500 bis 1200. Um eine hohe Mattheit der Folie im Sinne der vorliegenden Erfindung zu bekommen, hat es sich als günstig erwiesen, wenn der SV-Wert der Polymeren für die Komponente I der Deckschicht im Bereich von 500 bis 800, bevorzugt im Bereich von 500 bis 750, insbesondere bevorzugt im Bereich von 500 bis 700 liegen.

Die Komponente II der Mischung bzw. des Blends der Deckschicht ist ein Polyethylenterephthalat-Copolymer, welches aus dem Kondensationsprodukt der folgenden Monomeren bzw. deren zur Bildung von Polyestern befähigten Derivaten besteht:

A) 65 bis 95 Mol-% Isophthalsäure;

B) 0 bis 30 Mol-% wenigstens einer aliphatischen Dicarbonsäure vorzugsweise mit der Formel

$$HOOC(CH_2)_nCOOH$$

wobei
n im Bereich von 1 bis 11 , bevorzugt 1-9, liegt;

C) 5 bis 15 Mol-% wenigstens eines Sulfomonomeren enthaltend eine Alkalimetallsulfonatgruppe an dem aromatischen Teil einer Dicarbonsäure, und

D) der zur Bildung von 100 Mol-% Kondensat notwendigen stöchiometrischen Menge eines copolymerisierbaren aliphatischen oder cycloaliphatischen Glykols vorzugsweise mit 2 bis 11 Kohlenstoffatomen, besonders bevorzugt 2-9 C-Atome.

Die Prozentangaben sind bevorzugte Werte und jeweils bezogen auf die Gesamtmenge der die Komponente II bildenden Monomeren.

Die insgesamt anwesenden Säureäquivalente sollen auf molarer Basis im wesentlichen den insgesamt anwesenden Glykoläquivalenten entsprechen.

Als Komponente B) der Copolyester geeignete Dicarbonsäuren sind z.B. Malon-, Adipin-, Azelain-, Glutar-, Sebacin-, Kork-, Bernstein- und Brassylsäure sowie Mischungen dieser Säuren oder deren zur Bildung von Polyestern befähigte Derivate. Von den genannten Säuren wird Sebacinsäure bevorzugt.

Beispiele für Sulfomonomere, die eine Metallsulfonatgruppe an dem aromatischen Teil einer aromatischen Dicarbonsäure enthalten (Komponente C), sind solche Monomere, die der folgenden allgemeinen Formel entsprechen:

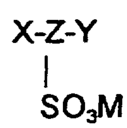

In dieser Formel ist

M ein einwertiges Kation eines Alkalimetalls, bevorzugt $Na^+$, $Li^+$ oder $K^+$.
Z ein dreiwertiger aromatischer Rest und
X und Y sind Carboxylgruppen oder Polyester bildende Äquivalente.

Monomere dieser Art sind in den **US 3,563,942** und **3,779,993** beschrieben. Beispiele solcher Monomeren sind Natrium-sulfoterephthalsäure, Natrium-5-sulfoisophthalsäure, Natrium-sulfophthalsäure, 5-(p-Natriumsulfphenoxy)-isophthalsäure, 5-(Natriumsulfopropoxy)-isophthalsäure und dergleichen Monomere sowie deren zur Bildung von Polyestern befähigte Derivate, wie z.B. die Dimethylester.

Unter dem Begriff "zur Bildung von Polyestern befähigte Derivate" sind hier Reaktionsteilnehmer mit solchen Gruppen zu verstehen, die zu Kondensationsreaktionen, insbesondere Umesterungsreaktionen, zur Bildung von Polyesterbindungen befähigt sind. Zu solchen Gruppen zählen Carboxylgruppen sowie deren niedere Alkylester, z.B. Dimethylterephthalat, Dietylterephthalat und zahlreiche andere Ester, Halogenide oder Salze. Bevorzugt werden die Säuremonomeren als Dimethylester verwendet, da auf diese Weise die Kondensationsreaktion besser gesteuert werden kann.

Als Komponente D) geeignete Glykole sind z.B. Ethylenglykol, 1,5-Pentadiol, 1,6-Hexandiol, Neopentylglykol, 1,10-Decandiol, Cyclohexan-dimethanol und ähnliche Substanzen. Bevorzugt wird Ethylenglykol verwendet.

Die Copolyester der Komponente II können durch bekannte Polymerisationstechniken hergestellt werden. Im allgemeinen wird so verfahren, dass die Säurekomponenten mit Glykol zusammengebracht und in Anwesenheit eines Veresterungskatalysators erhitzt werden, mit anschließender Zugabe eines Polykondensationskatalysators (Kunststoff Handbuch, Bd. VIII, Polyester, Carl Hanser Verlag München).

Es hat sich gezeigt, dass die verhältnismäßigen Anteile der Komponenten A, B, C und D, die zur Herstellung der erfindungsmäßigen Mischungen bzw. Blends eingesetzt werden, entscheidend für das Erzielen der matten Deckschicht sind. So sollte z.B. Isophthalsäure (Komponente A) zu mindestens 65 Mol-% als Säurekomponente vorhanden sein. Bevorzugt ist die Komponente A als reine Isophthalsäure, die in einer Menge von etwa 70 bis 95 Mol-% vorhanden ist.

Für die Komponente B gilt, dass jede Säure mit der genannten Formel zufriedenstellende Ergebnisse bringt, wobei Adipinsäure, Azelainsäure, Sebacinsäure, Malonsäure, Bernsteinsäure, Glutarsäure und Mischungen dieser Säuren bevorzugt werden. Die angestrebte Menge innerhalb des angegebenen Bereiches beträgt bevorzugt 1 bis 20 Mol-%, bezogen auf die Säurekomponenten der Mischung I, wenn die Komponente B in der Zusammensetzung enthalten ist.

Die Glykolkomponente ist in ungefähr stöchiometrischer Menge vorhanden.

Die für die Zwecke der Erfindung geeigneten Copolyester der Komponente II zeichnen sich weiterhin dadurch aus, dass sie eine Säurezahl unter 10 , vorzugsweise von 0 bis 3, ein mittleres Mol-Gewicht unter etwa 50.000 und einen SV-Wert im Bereich von etwa 30 bis 700, vorzugsweise etwa 350 bis 650, aufweisen.

Das Verhältnis (Gewichtsverhältnis) der beiden Komponenten I und II der Deckschichtmischung bzw. des Blends kann innerhalb weiter Grenzen variieren und richtet sich nach dem beabsichtigten Einsatzzweck der Mehrschichtfolie. Bevorzugt liegt das Verhältnis der Komponenten I und II in einem Bereich von I:II =10:90 bis I:II = 95:5, vorzugsweise zwischen I:II = 20:80 bis I:II = 95:5 und insbesondere zwischen I:II = 30:70 bis I:II =95:5.

Licht, insbesondere der ultraviolette Anteil der Sonnenstrahlung, d. h. der Wellenlängenbereich von 280 bis 400 nm, leitet bei Thermoplasten Abbauvorgänge ein, als deren Folge sich nicht nur das visuelle Erscheinungsbild infolge von Farbänderung bzw. Vergilbung ändert, sondern auch die mechanisch-physikalischen Eigenschaften negativ beeinflusst werden.

Die Inhibierung dieser photooxidativen Abbauvorgänge ist von erheblicher technischer und wirtschaftlicher Bedeutung, da andernfalls die Anwendungsmöglichkeiten von zahlreichen Thermoplasten drastisch eingeschränkt sind.

Polyethylenterephthalate beginnen beispielsweise schon unterhalb von 360nm UV-Licht zu absorbieren, ihre Absorption nimmt unterhalb von 320 nm beträchtlich zu und ist unterhalb von 300 nm sehr ausgeprägt. Die maximale Absorption liegt zwischen 280 und 300 nm.

In Gegenwart von Sauerstoff werden hauptsächlich Kettenspaltungen, jedoch keine Vemetzungen beobachtet. Kohlenmonoxid, Kohlendioxid und Carbonsäuren stellen die mengenmäßig überwiegenden Photooxidationsprodukte dar. Neben der direkten Photolyse der Estergruppen müssen noch Oxidationsreaktionen in Erwägung gezogen werden, die über Peroxidradikale ebenfalls die Bildung von Kohlendioxid zur Folge haben.

Die Photooxidation von Polyethylenterephthalaten kann auch über Wasserstoffabspaltung in $\alpha$-Stellung der Estergruppen zu Hydroperoxiden und deren Zersetzungsprodukten sowie zu damit verbundenen Kettenspaltungen führen (H. Day, D. M. Wiles: J. Appl. Polym. Sci 16, 1972, Seite 203).

UV-Stabilisatoren bzw. UV-Absorber als Lichtschutzmittel sind chemische Verbindungen, die in die physikalischen und chemischen Prozesse des lichtinduzierten Abbaus eingreifen können. Ruß und andere Pigmente können teilweise einen Lichtschutz bewirken. Diese Substanzen sind jedoch für transparente Folien ungeeignet, da sie zur

Verfärbung oder Farbänderung führen. Für transparente, matte Folien sind nur organische und metallorganische Verbindungen geeignet, die dem zu stabilisierenden Thermoplasten keine oder nur eine extrem geringe Farbe oder Farbänderung verleihen, d. h. die in dem Thermoplasten löslich sind.

Im Sinne der vorliegenden Erfindung geeignete UV-Stabilisatoren als Lichtschutzmittel sind UV-Stabilisatoren, die m indestens 70 %, vorzugsweise 80 %, besonders bevorzugt 90%, des UV-Lichtes im Wellenlängenbereich von 180 nm bis 380 nm, vorzugsweise 280 bis 350 nm absorbieren. Diese sind insbesondere geeignet, wenn sie im Temperaturbereich von 260 bis 300 °C thermisch stabil sind, d. h. sich nicht zersetzen und nicht zur Ausgasungführen. Geeignete UV-Stabilisatoren als Lichtschutzmittel sind die 2-Hydroxybenzotriazole und die Triazine.

In einer ganz besonders bevorzugten Ausführungsform enthält die erfindungsgemäße Folie 0,01 Gew.-% bis 5,0 Gew.-% 2-(4,6-Diphenyl-1,3,5-triazin 2-yl)-5-(hexyl)oxyphenol der Formel

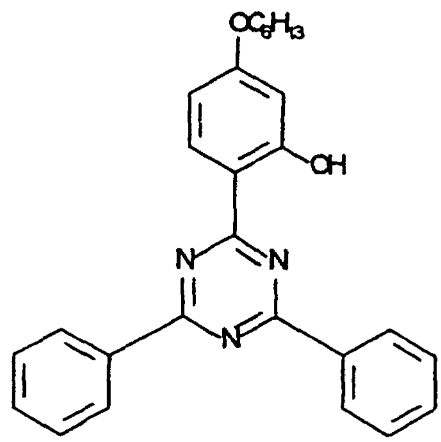

oder 0,01 Gew.-% bis 5,0 Gew.-% 2,2-Methylen-bis(6-(2H-benzotriazol-2-yl)-4-(1,1,2,2-tetramethylpropyl)-phenol der Formel

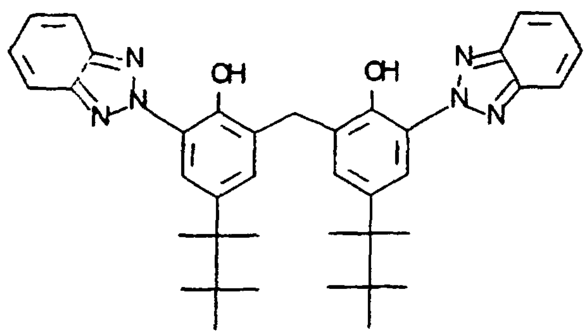

In einer bevorzugten Ausführungsform können auch Mischungen dieser beiden UV-Stabilisatoren oder Mischungen von mindestens einem dieser beiden UV-Stabilisatoren mit anderen UV-Stabilisatoren eingesetzt werden, wobei die Gesamtkonzentration an Lichtschutzmittel zwischen 0,01 Gew.-% und 5,0 Gew.-%, bezogen auf das Gewicht an kristallisierbarem Polyethylenterephthalat, liegt.

Der oder die UV-Stabilisatoren sind vorzugsweise in der/den Deckschichten enthalten. Bei Bedarf kann auch die Kemschicht mit UV-Stabilisator ausgerüstet sein.

Es war völlig überraschend, dass der Einsatz der oben genannten UV-Stabilisatoren in Folien zu dem gewünschten Ergebnis führte. Der Fachmann hätte vermutlich zunächst versucht, eine gewisse UV-Stabilität über ein Antioxidanz zu erreichen, hätte jedoch bei Bewitterung festgestellt, dass die Folie schnell gelb wird.

Vor dem Hintergrund, dass UV-Stabilisatoren das UV-Licht absorbieren und somit Schutz bieten, hätte der Fachmann wohl handelsübliche Stabilisatoren eingesetzt. Dabei hätte er festgestellt, dass

- der UV-Stabilisator eine mangelnde thermische Stabilität hat und sich bei Temperaturen zwischen 200 °C und 240 °C zersetzt und ausgast;
- er große Mengen (ca. 10 bis 15 Gew.-%) UV-Stabilisator einarbeiten muß, damit das UV-Licht absorbiert wird und

damit die Folie nicht geschädigt wird.

Bei diesen hohen Konzentrationen hätte er festgestellt, dass die Folie schon nach der Herstellung gelb ist, bei Gelbwertunterschieden (YID) um die 25. Des Weiteren hätte er festgestellt, dass die mechanischen Eigenschaften negativ beeinflusst werden. Beim Verstrecken hätte er ungewöhnliche Probleme bekommen wie

- Abrisse wegen mangelnder Festigkeit, d. h. E-Modul zu niedrig;
- Düsenablagerungen, was zu Profilschwankungen führt;
- Walzenablagerungen vom UV-Stabilisator, was zu Beeinträchtigungen der optischen Eigenschaften (Klebedefekte, inhomogene Oberfläche) führt;
- Ablagerungen in Streck-, Fixierrahmen, die auf die Folie tropfen.

Daher war es mehr als überraschend, dass bereits mit niedrigen Konzentrationen des UV-Stabilisators ein hervorragender UV-Schutz erzielt wurde. Sehr überraschend war, dass sich bei diesem hervorragenden UV-Schutz

- der Gelbwert der Folie im Vergleich zu einer nicht stabilisierten Folie im Rahmen der Meßgenauigkeit nicht ändert;
- sich keine Ausgasungen, keine Düsenablagerungen, keine Rahmenausdampfungen einstellten, wodurch die Folie eine exzellente Optik aufweist und ein ausgezeichnetes Profil und eine ausgezeichnete Planlage hat;
- sich die UV-stabilisierte Folie durch eine hervorragende Streckbarkeit auszeichnet, so dass sie verfahrenssicher und stabil auf high speed film lines bis zu Geschwindigkeiten von 420 m/min produktionssicher hergestellt werden kann.

Es war überraschend, dass sich orientierte PET-Folien durch einen im Vergleich zum Standardpolyester höheren Diethylenglykolgehalt und/oder Polyethylenglykolgehalt thermoformen lassen.

Der Thermoformprozess umfasst in der Regel die Schritte Vortrocknen, Aufheizen, Formen, Abkühlen, Entformen, Tempern. Beim Thermoformprozess wurde festgestellt, dass sich die erfindungsgemäßen Folien ohne vorheriges Vortrocknen überraschenderweise tiefziehen lassen. Dieser Vorteil im Vergleich zu tiefziehfähigen Polycarbonat- oder Polymethylmethacrylat-Folien, bei denen je nach Dicke Vortrocknungszeiten von 10-15 Stunden bei Temperaturen von 100 °C-120 °C, erforderlich sind, reduziert drastisch die Kosten des Umformprozesses.

Für das Thermoformen wurden beispielsweise folgende Verfahrensparameter gefunden

| **Verfahrensschritt** | **Erfindungsgemäße Folie** |
|---|---|
| Vortrocknen | Nicht erforderlich |
| Temperatur der Form °C | 100-160 |
| Aufheizzeit | < 5 sec pro 10 µm Dicke |
| Folientemperatur beim Verformen °C | 160-200 |
| Möglicher Verstreckfaktor | 1,5-2,0 |
| Detailwiedergabe | Gut |
| Schrumpf (Schwindung) % | < 1,5 |

Die Basisschicht und/oder die Deckschicht(en) und/oder die Zwischenschichten können zusätzlich übliche Additive, wie Stabilisatoren und Antiblockmittel, enthalten. Sie werden zweckmäßig dem Polymer bzw. der Polymermischung bereits vor dem Aufschmelzen zugesetzt. Als Stabilisatoren werden beispielsweise Phosphorverbindungen, wie Phosphorsäure oder Phosphorsäureester, eingesetzt. Typische Antiblockmittel (in diesem Zusammenhang auch als Pigmente bezeichnet) sind anorganische und/oder organische Partikel, beispielsweise Calciumcarbonat, amorphe Kieselsäure, Talk, Magnesiumcarbonat, Bariumcarbonat, Calciumsulfat, Bariumsulfat, Lithiumphosphat, Calciumphosphat, Magnesiumphosphat, Aluminiumoxid, LiF, Calcium-, Barium-, Zink- oder Mangan-Salze der eingesetzten Dicarbonsäuren, Ruß, Titandioxid, Kaolin oder vemetzte Polystyrol- oder Acrylat-Partikel.

Als Additive können auch Mischungen von zwei und mehr verschiedenen Antiblockmitteln oder Mischungen von Antiblockmitteln gleicher Zusammensetzung, aber unterschiedlicher Partikelgröße gewählt werden. Die Partikel können den einzelnen Schichten in den üblichen Konzentrationen, z.B. als glykolische Dispersion während der Polykondensation oder über Masterbatche bei der Extrusion zugegeben werden. Als besonders geeignet haben sich Pigmentkonzentrationen von 0,0001 bis 10 Gew.-% bezogen auf die sie enthaltenden Schichten, erwiesen. Durch die Zugabe von diesen Partikeln in die Deckschicht oder die Deckschichten hat man eine weitere vorteilhafte Möglichkeit,

den Mattgrad der Folie zu variieren. Mit der Zunahme der Pigmentkonzentration ist in der Regel auch eine Zunahme des Mattgrades der Folie verbunden. Eine detaillierte Beschreibung geeigneter Antiblockmittel findet sich beispielsweise in der **EP A 0 602 964.**

Gegenstand der vorliegenden Erfindung ist ferner ein Verfahren zur Herstellung dieser Folie, welches folgende Schritte umfasst:

a) Herstellen einer Folie aus Basis- und Deckschicht(en), und gegebenenfalls Zwischenschichten, durch Koextrusion,
b) biaxiales Verstrecken der Folie und
c) Thermofixieren der verstreckten Folie.

Zur Herstellung der erfindungsgemäßen Deckschicht(en) werden zweckmäßig Granulate aus der Mischungskomponente I und Granulate aus der Mischungskomponente II im gewünschten Mischungsverhältnis sowie gegebenenfalls das UV-Masterbatch direkt dem Extruder zugeführt. Es hat sich als zweckmäßig erwiesen, für die Extrusion der erfindungsgemäßen matten Deckschicht(en) einen Zweischneckenextruder zu verwenden, wie er z. B. in der **EP 0 826 478** beschrieben ist. Die Materialien lassen sich bei etwa 300 °C und bei einer Verweilzeit von etwa 5 min aufschmelzen und extrudieren. Unter diesen Bedingungen können im Extruder Umesterungsreaktionen ablaufen, bei denen sich weitere Copolymere aus den Homopolymeren und den Copolymeren bilden können.

Zweckmäßigerweise kann der UV-Absorber auch bereits beim Rohstoffhersteller in die Polymere der Deckschichten und/oder der Basisschicht eingearbeitet werden.

Besonders bevorzugt ist die Zugabe des UV-Absorbers über die Masterbatch-Technologie direkt bei der Folienherstellung. Der UV-Absorber wird in einem festen dispergiert. Als Trägermaterial kommen gewisse Harze, das Deckschicht-und/oder das Basisschichtpolymer selbst oder auch andere Polymere, die mit dem Thermoplast ausreichend verträglich sind, in Frage.

Wichtig bei der Masterbatch-Technologie ist, dass die Komgröße und das Schüttgewicht des Masterbatches ähnlich der Komgröße und dem Schüttgewicht der Basisschicht- und/oder Deckschichtpolymeren ist, so dass eine homogene Verteilung des UV-Absorbers und damit eine homogene UV-Stabilität erfolgen kann.

Die Polymere für die Basisschicht werden zweckmäßig über einen weiteren Extruder zugeführt. Etwa vorhandene Fremdkörper oder Verunreinigungen lassen sich aus der Polymerschmelze vor der Extrusion abfiltrieren. Die Schmelzen werden dann in einer Mehrschichtdüse zu flachen Schmetzefilmen ausgeformt und übereinander geschichtet. Anschließend wird der Mehrschichtfilm mit Hilfe einer Kühlwalze und gegebenenfalls weiteren Walzen abgezogen und verfestigt.

Die biaxiale Verstreckung wird im allgemeinen sequentiell oder simultan durchgeführt. Bei der sequentiellen Streckung wird vorzugsweise erst in Längsrichtung (d.h. in Maschinenrichtung) und anschließend in Querrichtung (d. h. senkrecht zur Maschinenrichtung) verstreckt. Dies führt zu einer Orientierung der Molekülketten. Das Verstrecken in Längsrichtung läßt sich mit Hilfe zweier entsprechend dem angestrebten Streckverhältnis verschieden schnell laufenden Walzen durchführen. Zum Querverstrecken benutzt man allgemein einen entsprechenden Kluppenrahmen. Bei der Simultanstreckung wird die Folie gleichzeitig in Längs- und in Querrichtung in einem Kluppenrahmen gestreckt.

Die Temperatur, bei der die Verstreckung durchgeführt wird, kann in einem relativ großen Bereich variieren und richtet sich nach den gewünschten Eigenschaften der Folie. Im allgemeinen wird die Längsstreckung bei ca. 80 bis 135 °C und die Querstreckung bei ca. 90 bis 150 °C durchgeführt. Das Längsstreckverhältnis liegt allgemein im Bereich von 2,5:1 bis 6:1, bevorzugt von 3:1 bis 5,5:1. Das Querstreckverhältnis liegt allgemein im Bereich von 3,0:1 bis 5,0:1, bevorzugt von 3,5:1 bis 4,5:1. Sofern gewünscht, kann sich an die Querstreckung nochmals eine Längsverstreckung und sogar eine weitere Querverstreckung anschließen.

Bei der nachfolgenden Thermofixierung wird die Folie etwa 0,1 bis 10 s lang bei einer Temperatur von ca. 150 bis 250 °C gehalten. Anschließend wird die Folie in üblicher Weise aufgewickelt.

Die Folie kann weiterhin auf mindestens einer ihrer Oberflächen beschichtet werden, so dass die Beschichtung auf der fertigen Folie eine Dicke von 5 bis 100 nm, bevorzugt 20 bis 70 nm, insbesondere 30 bis 50 nm aufweist. Die Beschichtung wird bevorzugt In-line aufgebracht, d.h. während des Folienherstellprozesses, zweckmäßigerweise vor der Querstreckung. Besonders bevorzugt ist die Aufbringung mittels des sogenannten "Reverse gravure-roll coating"-Verfahrens, bei dem sich die Beschichtungen äußerst homogen in den genannten Schichtdicken auftragen lassen. Die Beschichtungen werden bevorzugt als Lösungen, Suspensionen oder Dispersionen aufgetragen, besonders bevorzugt als wässrige Lösung, Suspension oder Dispersion. Die genannten Beschichtungen verleihen der Folienoberfläche eine zusätzliche Funktion bspw. wird die Folie dadurch siegelfähig, bedruckbar, metallisierbar, sterilisierbar, antistatisch oder sie verbessern z.B. die Aromabarriere oder ermöglichen die Haftung zu Materialien, die ansonsten nicht auf der Folienoberfläche haften würden (z.B. fotografische Emulsionen). Beispiele für Stoffe/Zusammensetzungen, die eine zusätzliche Funktionalität verleihen sind:

Acrylate, wie sie bspw. beschrieben sind in der WO 94/13476, Ethylvinylalkohole, PVDC, Wasserglas

($Na_2SiO_4$), hydrophilische Polyester (5-Na-sulfoisophthalsäurehaltige PET/IPA Polyester wie sie bspw. beschrieben sind in der **EP-A-0 144 878, US 4,252,885** oder **EP-A-0 296 620**, Vinylacetate wie sie bspw. beschrieben sind in der **WO 94/13481,** Polyvinylacetate, Polyurethane, Alkali- oder Erdalkalisalze von $C_{10}$-$C_{18}$-Fettsäuren, Butadiencopolymere mit Acrylnitril oder Methylmethacrylat, Methacrylsäure, Acrylsäure oder deren Ester.

Die genannten Stoffe/Zusammensetzungen werden als verdünnte Lösung, Emulsion oder Dispersion vorzugsweise als wässrige Lösung, Emulsion oder Dispersion auf eine oder beide Folienoberflächen aufgebracht und anschließend das Lösungsmittel verflüchtigt. Werden die Beschichtungen In-line vor der Querstreckung aufgebracht, reicht gewöhnlich die Temperaturbehandlung in der Querstreckung und anschließenden Hitzefixierung aus, um das Lösungsmittel zu verflüchtigen und die Beschichtung zu trocknen. Die getrockneten Beschichtungen haben dann die zuvor erwähnten gewünschten Schichtdicken.

Des Weiteren können die Folien - vorzugsweise in einem Off-Line-Verfahren mit Metallen wie Aluminium oder keramischen Materialien wie $SiO_x$ oder $Al_xO_y$ beschichtet werden. Dies verbessert insbesondere ihre Gasbarriereeigenschaften.

Die erfindungsgemäße Polyesterfolie weist vorzugsweise noch eine zweite Deckschicht C auf. Aufbau, Dicke und Zusammensetzung einer zweiten Deckschicht können unabhängig von der bereits vorhandenen Deckschicht gewählt werden, wobei die zweite Deckschicht ebenfalls die bereits genannten Polymere, UV-Absorber, und/oder Polymermischungen für die Basis- oder die erfindungsgemäße erste Deckschicht enthalten kann, welche aber nicht mit den der ersten Deckschicht identisch sein müssen. Die zweite Deckschicht kann auch andere gängige Deckschichtpolymere enthalten, die auch mit UV-Absorber ausgerüstet sein können.

Zwischen der Basisschicht und den Deckschicht(en) kann sich gegebenenfalls noch eine Zwischenschicht befinden. Sie kann aus den für die Basisschichten beschriebenen Polymeren bestehen. In einer besonders bevorzugten Ausführungsform besteht sie aus dem für die Basisschicht verwendeten Polyester. Sie kann auch die beschriebenen üblichen Additive und den UV-Absorber enthalten. Die Dicke der Zwischenschicht ist im allgemeinen größer als 0,3 µm und liegt vorzugsweise im Bereich von 0,5 bis 15 µm, insbesondere 1,0 bis 10 µm.

Die Dicke der Deckschicht(en) ist im allgemeinen größer als 0,1 µm und liegt vorzugsweise im Bereich von 0,2 bis 5 µm, insbesondere 0,2 bis 4 µm, wobei die Deckschichten gleich oder verschieden dick sein können.

Die Gesamtdicke der erfindungsgemäßen Polyesterfolie kann innerhalb weiter Grenzen variieren und richtet sich nach dem beabsichtigten Verwendungszweck. Sie beträgt vorzugsweise 4 bis 500 µm, insbesondere 5 bis 450 µm, vorzugsweise 6 bis 300 µm, wobei die Basisschicht einen Anteil von vorzugsweise etwa 40 bis 90 % an der Gesamtdicke hat.

Bewitterungstests haben ergeben, dass die erfindungsgemäßen UV-stabilisierten Folien selbst nach 5 bis 7 Jahren (aus den Bewitterungstests hochgerechnet) Außenanwendung im allgemeinen keine erhöhte Vergilbung, keine Versprödung, keinen Glanzverlust der Oberfläche, keine Rißbildung an der Oberfläche und keine Verschlechterung der mechanischen Eigenschaften aufweisen.

Ein weiterer Vorteil besteht darin, dass die Herstellungskosten der erfindungsgemäßen Folie nur unwesentlich über denen einer Folie aus Standardpolyesterrohstoffen liegen. Die sonstigen verarbeitungs- und gebrauchsrelevanten Eigenschaften der erfindungsgemäßen Folie bleiben im wesentlichen unverändert oder sind sogar verbessert. Daneben ist bei der Herstellung der Folie gewährleistet, dass das Regenerat in einem Anteil von bis zu 50 Gew.-%, bevorzugt 10 bis 50 Gew.-%, jeweils bezogen auf das Gesamtgewicht der Folie, wiederverwendet werden kann, ohne dass dabei die physikalischen Eigenschaften der Folie nennenswert negativ beeinflusst werden.

Die Folie eignet sich hervorragend zur Verpackung von licht- und/oder luftempfindlichen Nahrungs- und Genussmitteln, sowie zur Herstellung von Formkörpem, die einen UV-Schutz bieten oder UV-stabil sein sollen.

Zusammengefasst zeichnet sich die erfindungsgemäße Folie durch eine gute Thermoformbarkeit, eine UV-Licht-Undurchlässigkeit, eine hohe UV-Stabilität, einen niedrigen Glanz, insbesondere einen niedrigen Glanz der Folienoberfläche A, und durch eine vergleichsweise niedrige Trübung aus. Außerdem besitzt sie ein gutes Wickel-und Verarbeitungsverhalten. Weiterhin ist erwähnenswert, dass die erfindungsgemäße Deckschicht gut mit Kugelschreiber, Filzstift oder Füllfeder beschriftbar ist.

Der Glanz der Folienoberfläche A ist niedriger als 70. In einer bevorzugten Ausführungsform beträgt der Glanz dieser Seite weniger als 60 und in einer besonders bevorzugten Ausführungsform weniger als 50. Diese Folienoberfläche vermittelt damit einen besonders hohen werbewirksamen Charakter und eignet sich daher insbesondere als außenliegende Oberfläche bei einer Verpackung.

Die Trübung der Folie ist kleiner als 40 %. In einer bevorzugten Ausführungsform beträgt die Trübung der Folie weniger als 35 % und in einer besonders bevorzugten Ausführungsform weniger als 30 %. Durch die vergleichsweise geringe Trübung der Folie (verglichen mit einer matten Monofolie, siehe Vergleichsbeispiel) kann die Folie z.B. im Konterdruck bedruckt werden oder es können Sichtfenster eingebaut werden, durch die z.B. das Füllgut sehr gut zu erkennen ist.

Durch die Kombination vorteilhafter Eigenschaften eignet sich die erfindungsgemäße Folie hervorragend für eine Vielzahl verschiedener Anwendungen, beispielsweise für innenraumverkleidungen, für Messebau und Messeartikel, als Displays, für Schilder, für Schutzverglasungen von Maschinen und Fahrzeugen, im Beleuchtungssektor, im Laden- und Regalbau, als Werbeartikel, Kaschiermedium, für Gewächshäuser, Überdachungen, Außenverkleidungen, Abdeckungen, Anwendungen im Bausektor und Lichtwerbeprofile, Schattenmatten, Elektroanwendungen sowie Thermoformanwendungen.

Weitere Anwendungsgebiete sind die Verwendung zur Herstellung von Etiketten (Labels), als Trennfolie oder als Prägefolie.

Die nachstehende Tabelle (Tabelle 1) fasst die wichtigsten erfindungsgemäßen Folieneigenschaften noch einmal zusammen.

**Tabelle 1**

| | erfindungsgemäßer Bereich | bevorzugt | besonders bevorzugt | Einheit | Meßmethode |
|---|---|---|---|---|---|
| Glanz, Seite A (Messwinkel 60°) | < 70 | < 60 | < 50 | | DIN 67 530 |
| Trübung | < 40 | < 35 | < 30 | % | ASTM-D 1003-52 |
| Reibungskoeffizient: | | | | | DIN 53 375 |
| A-Seite gegen sich selbst | < 0,6 | < 0,55 | < 0,50 | | |
| C- bzw. B-Seite gegen sich selbst | < 0,5 | < 0,55 | < 0,55 | | |
| mittlere Rauigkeit $R_a$ A-Seite | 200 - 600 | 230 – 550 | 250 – 530 | nm | DIN 4768, bei einem Cut-off von 0,25 nm |
| Gelbwert (YID) | < 30 | < 20 | < 10 | | DIN 6167 |
| Hohe UV-Stabilität | Ja | | | | |
| UV-Licht-Durchlässigkeit ab Wellenlänge | > 350 | > 360 | | nm | |
| Thermoformbarkeit | Ja | | | | |
| Verstreckfaktor beim Thermoformen | 1,5 – 2,0 | | | | |
| Detailwiedergabe beim Thermoformen | gut | | | | |

Zur Charakterisierung der Rohstoffe und der Folien wurden die folgenden Methoden benutzt

**Meßmethoden**

DIN = Deutsches Institut für Normung
ISO = International Organization for Standardization
ASTM = American Society for Testing and Materials

**DEG-Gehalt/PEG-Gehalt/IPA-Gehalt**

Der DEG-/PEG-/IPA-Gehalt wird gaschromatografisch nach Verseifung in methanolischer KOH und Neutralisation mit wässrigem HCl bestimmt.

**SV (DCE), IV (DVE)**

Die Standardviskosität SV (DCE) wird, angelehnt an DIN 53726, in Dichloressigsäure gemessen.
Die intrinsische Viskosität (IV) berechnet sich wie folgt aus der Standardviskosität

$$IV\ (DCE) = 6{,}67 \cdot 10^{-4}\ SV\ (DCE) + 0{,}118$$

**Reibung**

Die Reibung wurde nach DIN 53 375 bestimmt. Die Gleitreibungszahl wurde 14 Tage nach der Produktion gemessen.

**Oberflächenspannung**

Die Oberflächenspannung wurde mit der sogenannten Tintenmethode (DIN 53 364) bestimmt.

**Trübung**

Die Trübung der Folie wurde nach ASTM-D 1003-52 gemessen. Die Trübungsmessung nach Hölz wurde in Anlehnung an ASTM-D 1003-52 bestimmt, wobei jedoch zur Ausnutzung des optimalen Messbereichs an vier übereinanderliegenden Folienlagen gemessen und anstelle einer 4°-Lochblende eine 1°-Spaltblende eingesetzt wurde.

**Glanz**

Der Glanz wurde nach DIN 67 530 bestimmt. Gemessen wurde der Reflektorwert als optische Kenngröße für die Oberfläche einer Folie. Angelehnt an die Normen ASTM-D 523-78 und ISO 2813 wurde der Einstrahlwinkel mit 20° oder 60° eingestellt. Ein Lichtstrahl trifft unter dem eingestellten Einstrahlwinkel auf die ebene Prüffläche und wird von dieser reflektiert bzw. gestreut. Die auf den photoelektronischen Empfänger auffallenden Lichtstrahlen werden als proportionale elektrische Größe angezeigt. Der Messwert ist dimensionslos und muß mit dem Einstrahlwinkel angegeben werden.

**Rauigkeit**

Die Rauigkeit $R_a$ der Folie wurde nach DIN 4768 bei einem Cut-off von 0,25 nm bestimmt.

**Mechanische Eigenschaften**

Der E-Modul und die Reißfestigkeit und die Reißdehnung werden in Längs- und Querrichtung nach ISO 527-1-2 gemessen.

**Bewitterung (beidseitig), UV-Stabilität:**

Die UV-Stabilität wird nach der Testspezifikation ISO 4892 wie folgt geprüft:

| | |
|---|---|
| Testgerät | Atlas Ci 65 Weather Ometer |
| Testbedingungen | ISO 4892, d. h. künstliche Bewitterung |
| Bestrahlungszeit | 1000 Stunden (pro Seite) |
| Bestrahlung | 0,5 $W/m^2$, 340 nm |
| Temperatur | 63 °C |
| Relative Luftfeuchte | 50 % |
| Xenonlampe | innerer und äußerer Filter aus Borosilikat |
| Bestrahlungszyklen | 102 Minuten UV-Licht, dann 18 Minuten UV-Licht mit Wasserbesprühung der Proben dann wieder 102 Minuten UV-Licht usw. |

Numerische Werte von < 0,6 sind vemachlässigbar und bedeuten, dass keine signifikante Farbänderung vorliegt.

**Gelbwert**

Der Gelbwert (YID) ist die Abweichung von der Farblosigkeit in Richtung "Gelb" und wird gemäß DIN 6167 gemessen. Gelbwerte (YID) von < 5 sind visuell nicht sichtbar.

Bei nachstehenden Beispielen und Vergleichsbeispielen handelt es sich jeweils um Folien unterschiedlicher Dicke, die auf der beschriebenen Extrusionsstraße hergestellt werden.

Alle Folien wurden nach der Testspezifikation ISO 4892 beidseitig je 1000 Stunden pro Seite mit dem Atlas Ci 65 Weather Ometer der Fa. Atlas bewittert und anschließend bezüglich der mechanischen Eigenschaften, dem Gelbwert (YID), der Oberflächendefekte, der Lichttransmission und des Glanzes geprüft.

Die folgenden Beispiele illustrieren die Erfindung.

**Beispiel 1**

a) Zubereitung der Komponente II für die erfindungsgemäße Deckschichtmischung Ein Copolyester mit ca. 90 Mol-% Isophthalsäure und 10 Mol-% des Natriumsalzes der 5-Sulfoisophthalsäure als Säurekomponente und 100 Mol-% Ethylenglykol als Glykolkomponente wurde nach dem folgenden Verfahren hergestellt:

Ein 2 l fassender Reaktionsbehälter aus Edelstahl, der mit einem Ankerrührer, einem Thermoelement zur Messung der Temperatur des Gefäßinhalts, einer 18 Zoll-Claisen/Vigreux-Destillationskolonne mit Kühler und Vorlage, einer Einlassöffnung und einem Heizmantel ausgerüstet war, wurde auf 190 °C vorgeheizt, mit Stickstoff gespült und mit 1065,6 g Dimethylisophthalat, 180,6 g Dimethyl-5-sulfoisophthalat-natriumsalz und 756,9 g Ethylenglykol befüllt. Außerdem wurden noch ein Puffer ($Na_2CO_3$ 10 $H_2O$ - 0,439 g) und ein Umesterungskatalysator ($(Mn(OAc)_2 \cdot 4\ H_2O$ ; 0,563 g Ac=Acetat) in ein Gefäß gegeben. Das Gemisch wurde unter Rühren erhitzt, wobei Methanol abdestillierte. Während der Destillation wurde die Gefäßtemperatur allmählich auf 250 °C erhöht. Als das Gewicht des Destillates der theoretischen Methanolausbeute entsprach, wurde eine Ethylenglykollösung mit einem Gehalt von 0,188 g phosphoriger Säure im Überschuss zugesetzt. Die Destillationskolonne wurde durch einen gekrümmten Dampfabzug mit Vorlage ersetzt. Dem Reaktionsgemisch wurden 20 g reines Ethylencarbonat zugegeben, und sofort setzte eine heftige Gasentwicklung ($CO_2$) ein. Die $CO_2$-Entwicklung ließ nach etwa 10 min nach. Es wurde dann ein Unterdruck von 240 mm Hg gezogen und der Polykondensationskatalysator (0,563 g $Sb_2O_3$) in einer Ethylenglykolaufschlämmung) hinzugefügt. Das Reaktionsgemisch wurde unter Beibehaltung des Unterdruckes von 240 mm Hg 10 min gerührt, wonach der Druck in Stufen von jeweils 10 mm Hg/min von 240 mm Hg auf 20 mm Hg weiter reduziert wurde. Sobald das Vakuum im System auf 20 mm Hg reduziert war, wurde die Gefäßtemperatur mit einer Geschwindigkeit von 2 °C/min von 250 °C auf 290 °C angehoben. Bei einer Temperatur von 290 °C im Gefäß wurde die Rührergeschwindigkeit gedrosselt und der Druck auf höchstens 0,1 mm Hg gesenkt. Zu diesem Zeitpunkt wurde ein Amperemeterablesung des Rührermotors vorgenommen. Die Viskosität des Polymeren wurde gesteuert, indem man die Polykondensation nach festen Werten für die Veränderung der Amperezahl des Rührermotors von (jeweils) 2 - 3 A ablaufen ließ. Als das gewünschte Molgewicht erreicht war, wurde das Gefäß mit Stickstoff unter Druck gesetzt, um das flüssige Polymere aus dem Bodenstopfen des Gefäßes in ein Abschreckbad aus Eiswasser zu pressen.

B) Mischungsherstellung für die erfindungsgemäße Deckschicht A

Es wurden 75 Gew.-% der Komponente I (Polyethylenterephthalat mit einem SV-Wert von 680) mit 15 Gew.-% der Komponente II und 10 Gew.-% eines Masterbatches, welches den UV-Stabilisator enthält, dem Einfülltrichter eines Zweischneckenextruders zugeführt und diese Komponenten zusammen bei ca. 300 °C extrudiert und dem Deckschichtkanal A einer Mehrschichtdüse zugeführt.

Das Masterbatch setzt sich aus 5 Gew.-% 2-(4,6 Diphenyl-1,3,5-triazin-2yl)-5-(hexyl)-oxyohenol (® TINUVIN 1577; Fa. Ciba-Geigy) als UV-Absorber und 95 Gew.-% Polyethylenterephthalat zusammen.

Zugleich wurden Chips aus Polyethylenterephthalat welches einen DEG-Gehalt von 1,6 Gew.-% und einen PEG-Gehalt von 1,7 Gew.-% aufweist bei 160 °C auf eine Restfeuchte von weniger als 50 ppm getrocknet und dem Extruder für die Basisschicht zugeführt. Ebenfalls wurden Chips aus Polyethylenterephthalat, welches einen DEG-Gehalt von 1,6 Gew.-% und einen DEG-Gehalt von 1,7 Gew.-% aufweist, UV-Masterbatch und einem Füllstoff dem Extruder für die Deckschicht C zugeführt. Durch Koextrusion und anschließende stufenweise Orientierung in Längs- und Querrichtung wurde dann eine transparente dreischichtige Folie mit ABC-Aufbau und einer Gesamtdicke von 12 µm hergestellt. Die Deckschichten hatten eine Dicke von jeweils 1,5 µm.

| Basisschicht B: | |
|---|---|
| 95 Gew.-% | Polyethylenterephthalat mit einem SV-Wert von 800, einen DEG-Gehalt von 1,6 Gew.-% und einen PEG-Gehalt von 1,7 Gew.-%<br>5 Gew.-%Masterbatch aus 99 Gew.-% Polyethylenterephthalat und 1,0 Gew.-% Kieselsäurepartikel (®Sylobloc 44 H der Firma Grace) mit einer mittleren Teilchengröße von 4,5 µm. |
| **Deckschicht A:** | |
| 75 Gew.-% | Komponente I und |
| 15 Gew.-% | Komponente II |
| 10 Gew.-% | UV-Masterbatch aus 5 Gew.-% ®TINUVIN 1577 und 95 Gew.-% Polyethylenterephthalat |
| **Deckschicht C:** | |
| 80 Gew.-% | Polyethylenterephthalat mit einem SV-Wert von 800, einem DEG-Gehalt von 1,6 Gew.-% und einen PEG-Gehalt von 1,7 Gew.-%<br>10 Gew.-% Masterbatch aus 99 Gew.-% Polyethylenterephthalat und 1,0 Gew.-% Kieselsäurepartikel (®Sylobloc 44 H der Firma Grace) mit einer mittleren Teilchengröße von 4,5 µm |
| 10 Gew.-% | UV-Masterbatch aus 5 Gew.-% ®TINUVIN 1577 und 95 Gew.-% Polyethylenterephthalat |

Die einzelnen Verfahrensschritte waren:

| | | |
|---|---|---|
| Längsstreckung | Temperatur | 85-135 °C |
| | Längsstreckverhältnis | 4,0 : 1 |
| Querstreckung | Temperatur | 85-135 °C |
| | Querstreckverhältnis | 4,0: 1 |
| Fixierung | Temperatur | 230 °C |

**Beispiel 2**

Analog zu Beispiel 1 wurde durch Koextrusion eine dreischichtige Folie mit einer Gesamtdicke von 12 µm hergestellt. Es wurde nur die Zusammensetzung der Deckschicht A geändert:

| Deckschicht A: | |
|---|---|
| 70 Gew.-% | Komponente I |
| 20 Gew.-% | Komponente II und |
| 10 Gew.-% | UV-Masterbatch |

**Beispiel 3**

Eine koextrudierte Folie mit der Rezeptur gemäß Beispiel 1, bei der die Deckschicht A wie folgt zusammengesetzt war:

| | |
|---|---|
| 65 Gew.-%<br>25 Gew.-%<br>10 Gew.- % | Komponente I<br>Komponente II und<br>UV-Masterbatch |

**Beispiel 4**

Eine koextrudierte Folie mit der Rezeptur gemäß Beispiel 1, bei der die Deckschicht A wie folgt zusammengesetzt war:

| | |
|---|---|
| 55 Gew.-%<br>35 Gew.-%<br>10 Gew.-% | Komponente I<br>Komponente II und<br>UV-Masterbatch |

**Vergleichsbeispiel**

Es wurde eine Monofolie hergestellt, die wie die Deckschicht A aus Beispiel 3 zusammengesetzt war, aber keinen UV-Absorber enthält und keinen höheren DEG-Gehalt aufweist. Die Folie enthält auch kein PEG. Die Folienoberflächen hatten die geforderte Mattheit, die Folie entsprach jedoch nicht den gestellten Anforderungen, weil sie zu trüb war. Außerdem war es sehr schwer, die Folie verfahrenssicher und daher wirtschaftlich herzustellen.

Des Weiteren ist die Folie nicht UV-stabil und läßt das schädliche UV-Licht durch. Nach 1000 Stunden Bewitterung zeigt die Folie Risse und Versprödungserscheinungen sowie eine sichtbare Gelbfärbung.

Die Folie war nur unzureichend thermoformbar.

Die Ergebnisse der Ausführungsbeispiele und des Vergleichsbeispiels(VB) sind in der nachfolgenden Tabelle 2 zusammengefasst:

Tabelle 2

| Beispiel Nr. | Foliendicke (µm) | Deckschichtdicke A/C (µm) | Folienaufbau | Glanz (60° Messwinkel) | | Trübung | Strahlendurchlässigkeit (nm) |
|---|---|---|---|---|---|---|---|
| | | | | A-Seite | C-Seite | | |
| 1 | 12 | 1,5/1,5 | ABC | 65 | 175 | 25 | >360 |
| 2 | 12 | 1,5/1,5 | ABC | 55 | 175 | 26 | >360 |
| 3 | 12 | 1,5/1,5 | ABC | 45 | 175 | 28 | >360 |
| 4 | 12 | 1,5/1,5 | ABC | 35 | 175 | 30 | >360 |
| VB | 12 | | A | 35 | 160 | 70 | >280 |

Nach 1000 Stunden Bewitterung mit dem Atlas CI 65 Weather Ometer zeigen die Folien aus den Beispielen 1 bis 4 keinerlei Versprödung, keine Risse und Gelbwerte < 10. Die Folien aus Beispiel 1 - 4 lassen sich auf handelsüblichen Tiefziehmaschinen z. B. von Fa. IIlig (Deutschland) ohne Vortrocknung zu Formkörpem thermoformen. Die Detailwiedergabe der tiefgezogenen Teile ist bei einer homogenen Oberfläche hervorragend.

## Patentansprüche

1. Koextrudierte, biaxial orientierte und thermoformbare Polyesterfolie, welche eine Basisschicht (B) aus einem thermoplastischen, kristallisierbaren Polyester mit einem Diethylenglykoloder einem Polyethylenglykolgehalt von ≥ 1 Gew.-% und mindestens eine matte Deckschicht und gegebenenfalls weitere Zwischenschichten aufweist, und mindestens einen UV-Absorber enthält, der aus der Gruppe 2-Hydroxybenzotriazole oder Triazine oder Mischungen von diesen ist und wobei die Gesamtkonzentration an Lichtschutzmitteln zwischen 0,01 und 5 Gew.-% liegt, bezogen auf das Gewicht an kristallisierbarem Polyethylenterephthalat, wobei die matte Deckschicht eine Mischung und/oder ein Blend aus zwei Komponenten I und II enthält, wobei die Komponente I im wesentlichen ein Polyethylenterephthalat-Homopolymer oder Polyethylenterephthalat Copolymer oder eine Mischung aus Polyethylenterephthalat-Homopolymer oder Polyethylenterephthalat Copolymeren ist und die Komponente II ein Polyethylenterephthalat-Copolymer ist aus Isophthalsäure, ggf. aliphatischer Dicarbonsäure, Sulfomonomerem, das eine Metallsulfonatgruppe an dem aromatischen Teil einer aromatischen Dicarbonsäure enthält, und aliphatischem oder cycloaliphatischem Glykol.

2. Polyesterfolie gemäß Anspruch 1, **dadurch gekennzeichnet, dass** sie einen Schichtaufbau A-B-C aufweist, wobei die Deckschichten A und C gleich oder verschieden sein können.

3. Polyesterfolie gemäß Anspruch 1 oder 2, **dadurch gekennzeichnet, dass** die Basisschicht zu mindestens 70 Gew.-% aus einem thermoplastischen Polyester besteht.

4. Polyesterfolie gemäß einem oder mehreren der Ansprüche 1 bis 3, **dadurch gekennzeichnet, dass** als thermoplastischer Polyester Polyethylenterephthalat oder ein Polyester verwendet wird, der zu mindestens 90 Mol-% aus Ethylenglykol- und Terephthalsäureeinheiten oder aus Ethylenglykol- und Naphthalin-2.6-dicarbonsäureeinheiten besteht.

5. Polyesterfolie gemäß einem oder mehreren der Ansprüche 1 bis 4, **dadurch gekennzeichnet, dass** der Polyester der Basisschicht einen Diethylenglykolgehalt und oder einen Polyethylenglykolgehalt von größer 1,3 Gew.-%, bevorzugt von 1,6 bis 5 Gew.-%, aufweist.

6. Polyesterfolie gemäß einem oder mehreren der Ansprüche 1 bis 5, **dadurch gekennzeichnet, dass** es sich bei der Komponente II der Mischung bzw. des B lends der Deckschicht um ein Copolymer handelt, welches aus dem Kondensationsprodukt von isophthalsäure, gegebenfalls mindestens einer aliphatischen Dicarbonsäure der Formel $HOOC(CH_2)_nCOOH$ mit n = 1-11, mindestens einem Sulfomonomeren, das eine Alkalimetallsulfonatgruppe an dem aromatischen Teil einer Dicarbonsäure aufweist, und einem copolymerisierbaren aliphatischen oder cycloaliphatischen Glykol oder deren zur Bildung von Polyestern befähigten Derivaten besteht.

7. Polyesterfolie gemäß einem oder mehreren der Ansprüche 1 bis 6, **dadurch gekennzeichnet, dass** die zur Bildung der Komponente II verwendeten Monomeren in folgenden Molverhältnissen vorhanden sind Isophthalsäure 65 - 95 Mol-%, aliphatische Dicarbonsäure 0-30 Mol-%, Sulfomonomeres 5-15 Mol-% und die zur Bildung von 100 Mol-% notwendige stöchiometrische Menge an Glykol.

8. Polyesterfolie gemäß einem oder mehreren der Ansprüche 1 bis 7, **dadurch gekennzeichnet, dass** der UV-Absorber in der Basisschicht und/oder den Deckschichten enthalten ist.

9. Polyesterfolie gemäß einem oder mehreren der Ansprüche 1 bis 8, **dadurch gekennzeichnet, dass** als UV-Absorber 2-(4,6-Diphenyl-1,3,5-triazin-2-yl)-5-(hexyl)oxyphenol oder 2,2'-Methylen-bis-6-(2H-benzotriazol-2-yl)-4-(1,1,2,2-tetramethylpropyl)-phenol oder Mischungen dieser UV-Absorber mit anderen verwendet werden.

10. Polyesterfolie gemäß einem oder mehreren der Ansprüche 1 bis 9, **dadurch gekennzeichnet, dass** sie auf mindestens einer Oberfläche funktional beschichtet ist.

**11.** Verfahren zur Herstellung einer Polyesterfolie gemäß einem oder mehreren der Ansprüche 1 bis 10, **dadurch gekennzeichnet, dass** man die für die Herstellung der Basis- und Deckschichten und gegebenfalls Zwischenschichten erforderlichen Ausgangsstoffe über einen oder mehrere Extruder durch eine Mehrschichtdüse koextrudiert und die erhaltene Folie biaxial verstreckt und thermofixiert und gegebenenfalls beschichtet.

**12.** Verfahren gemäß Anspruch 11, **dadurch gekennzeichnet, dass** der UV-Absorber mittels der Masterbatch-Technologie zugesetzt wird.

**13.** Verwendung einer Polyesterfolie gemäß einem oder mehreren der Ansprüche 1 bis 10 zur Herstellung von Formkörpern.

**14.** Formkörper hergestellt unter Verwendung einer Polyesterfolie gemäß einem oder mehreren der Ansprüche 1 bis 10.

## Claims

**1.** A co-extruded, biaxially oriented and thermoformable polyester film which has a base layer (B) composed of a thermoplastic, crystallizable polyester with a diethylene glycol content or polyethylene glycol content of ≥ 1 % by weight, and has at least one matt outer layer and, where appropriate, has other intermediate layers, and comprises at least one UV absorber from the group of 2-hydroxybenzotriazoles or triazines, or mixtures of these, and where the total concentration of light stabilizers is from 0.01 to 5 % by weight, based on the weight of crystallizable polyethylene terephthalate, where the matt outer layer comprises a mixture and/or a blend composed of two components I and II, where component I is in essence a polyethylene terephthalate homopolymer or polyethylene terephthalate copolymer or is a mixture composed of polyethylene terephthalate homopolymer or of polyethylene terephthalate copolymers, and component II is a polyethylene terephthalate copolymer composed of isophthalic acid, and where appropriate of aliphatic dicarboxylic acid, of a sulfomonomer which contains a metal sulfonate group on the aromatic moiety of an aromatic dicarboxylic acid, and of aliphatic or cycloaliphatic glycol.

**2.** The polyester film as claimed in claim 1, wherein the film has an A-B-C layer structure, where the outer layers A and C may be identical or different.

**3.** The polyester film as claimed in claim 1 or 2, wherein at least 70 % by weight of the base layer is composed of a thermoplastic polyester.

**4.** The polyester film as claimed in one or more of claims 1 to 3, wherein the thermoplastic polyester used comprises polyethylene terephthalate or a polyester, at least 90 mol% of which is composed of ethylene glycol units and of terephthalic acid units or of ethylene glycol units and naphthalene-2,6-dicarboxylic acid units.

**5.** The polyester film as claimed in one or more of claims 1 to 4, wherein the polyester of the base layer has a diethylene glycol content and/or a polyethylene glycol content of more than 1.3 % by weight, preferably from 1.6 to 5 % by weight.

**6.** The polyester film as claimed in one or more of claims 1 to 5, wherein component II of the mixture and, respectively, of the blend of the outer layer is a copolymer which is composed of the condensation product of isophthalic acid, and, if desired, of at least one aliphatic dicarboxylic acid of the formula $HOOC(CH_2)_nCOOH$, where n = 1 to 11, and of at least one sulfo monomer which has an alkali metal sulfonate group on the aromatic moiety of a dicarboxylic acid, and of a copolymerizable aliphatic or cycloaliphatic glycol, or of derivatives of these capable of forming polyesters.

**7.** The polyester film as claimed in one or more of claims 1 to 6, wherein the monomers used to form component II are present in the following molar ratios: isophthalic acid from 65 to 95 mol%, aliphatic dicarboxylic acid from 0 to 30 mol%, sulfo monomer from 5 to 15 mol%, and the stoichiometric amount of glycol needed to reach 100 mol%.

**8.** The polyester film as claimed in one or more of claims 1 to 7, wherein the UV absorber is present in the base layer and/or in the outer layers.

**9.** The polyester film as claimed in one or more of claims 1 to 8, wherein the UV absorbers used are 2-(4,6-diphenyl-1,3,5-triazin-2-yl)-5-hexyloxyphenol or 2,2'-methylenebis-6-(2H-benzotriazol-2-yl)-4-(1,1,2,2-tetramethylpropyl) phenol or mixtures of these UV absorbers with others.

**10.** The polyester film as claimed in one or more of claims 1 to 9, wherein at least one surface of the film has a functional coating.

**11.** A process for producing a polyester film as claimed in one or more of claims 1 to 10, which comprises coextruding, by way of one or more extruders through a coextrusion die, the starting materials required for producing the base layers and outer layers and any intermediate layers present, and biaxially orienting and heat-setting, and if desired coating, the resultant film.

**12.** The process as claimed in claim 11, wherein the UV absorber is added using masterbatch technology.

**13.** The use of a polyester film as claimed in one or more of claims 1 to 10 for producing moldings.

**14.** A molding produced using a polyester film as claimed in one or more of claims 1 to 10.

**Revendications**

**1.** Film de polyester coextrudé, orienté, biaxialement et thermoformable, qui comporte une couche de base (B) constituée d'un polyester thermoplastique cristallisable présentant une teneur supérieure ou égale à 1 % en poids d'un diéthylène glycol ou d'un polyéthylène glycol et au moins une couche de surface mate, et éventuellement d'autres couches intermédiaires, et au moins un absorbant d'UV du groupe consistant en le 2-hydroxybenzotriazole, la triazine et les mélanges de ces derniers, la teneur totale en protecteur vis-à-vis de la lumière se situant entre 0,01 et 5 % en poids sur la base du poids de polyéthylène téréphthalate cristallisable,

la couche de surface mate contenant un mélange et/ou blend de deux composants I et II, le composant I étant essentiellement un homopolymère polyéthylène téréphthalate ou un copolymère polyéthylène téréphthalate ou un mélanges d'homopolymères polyéthylène téréphthalate ou de copolymères polyéthylène téréphthalate, et le composant II étant un copolymère polyéthylène téréphthalate à base d'acide isophtalique, ou éventuellement d'acide dicarboxylique aliphatique, de monomères sulfonés (sulfomonomères) contenant un groupe sulfonate de métal au niveau de la partie aromatique d'un acide dicarboxylique aromatique, et de glycol aliphatique ou cycloaliphatique.

**2.** Film de polyester selon la revendication 1, **caractérisé en ce qu'**il présente une structure stratifiée A-B-C, les couches de surface A et C pouvant être identiques ou différentes.

**3.** Film de polyester selon une des revendications 1 ou 2, **caractérisé en ce que** la couche de base est composée pour au moins 70 % en poids d'un polyester thermoplastique.

**4.** Film de polyester selon une ou plusieurs des revendications 1 à 3, **caractérisé en ce qu'**on utilise à titre de polyester thermoplastique, un polyester polyéthylène téréphthalate ou un polyester qui est composé pour au moins 90 % en moles d'unités éthylène glycol et acide téréphtalique ou d'unités éthylène glycol et naphtalin-2,6-acide dicarboxylique.

**5.** Film de polyester selon une ou plusieurs des revendications 1 à 4, **caractérisé en ce que** le polyester de la couche de base présente une teneur en diéthylène glycol ou une teneur en polyéthylène glycol supérieure à 1, 3% en poids, de préférence de 1,6 à 5 % en poids.

**6.** Film polyester selon une ou plusieurs des revendications 1 à 5, **caractérisé en ce que** le composant II du mélange et/ou blend de la couche de surface est un copolymère, qui est composé du produit de condensation d'acide isophtalique, ou éventuellement d'au moins un acide dicarboxylique isophtalique de formule $HOOC(CH_2)_nCOOH$ avec n=1-11, d'au moins un monomère sulfoné, qui présente un groupe sulfonate de métal alcalin au niveau de la part aromatique d'un acide dicarboxylique, et d'un glycol copolymérisable aliphatique ou cycloaliphatique ou de dérivés de ce dernier aptes à la formation de polyesters.

**7.** Filme polyester selon une ou plusieurs des revendications 1 à 6, **caractérisé en ce que** les monomères utilisés pour la formation du composant II sont présents dans les rapports molaires suivants : acide isophtalique 65 à 95

% en moles, acide dicarboxylique aliphatique 0 à 30 % en moles, monomères sulfonés 5 à 15 % en moles, plus la quantité stochiométrique de glycol nécessaire pour atteindre 100 % en moles.

8. Film polyester selon une ou plusieurs des revendications 1 à 7, **caractérisé en ce que** l'absorbant d'UV est contenu dans la couche de base ou dans la couche de surface.

9. Film polyester selon une ou plusieurs des revendications 1 à 8, **caractérisé en ce qu'**on utilise à titre d'absorbant d'UV, du 2-(4,6-diphényl-1,3,3-triazine-2-y)-5-(hexyle)hydroxyphénol ou du 2,2-méthylène-bis-6-(2H-benzotriazol-2-yl)-4-(1,1,2,2-tetraméthylpropyl)phénol, ou un mélange de ces absorbants d'UV avec d'autres.

10. Film polyester selon une ou plusieurs des revendications 1 à 9, **caractérisé en ce qu'**au moins une de ses surfaces porte un revêtement fonctionnel.

11. Procédé de fabrication d'au moins un film polyester selon une ou plusieurs des revendications 1 à 10, **caractérisé en ce que** le matériau de départ nécessaire pour la fabrication de la couche de base et de la couche de surface, et le cas échéant, des couches intermédiaires, est coextrudé par une filière d'extrusion multicouche en utilisant une ou plusieurs extrudeuses, que le film obtenu est étiré biaxialement, thermofixé et éventuellement revêtu.

12. Procédé selon la revendication 11, **caractérisé en ce que** l'absorbant d'UV est ajouté en utilisant la technologie masterbatch.

13. Utilisation d'un film polyester selon une ou plusieurs des revendications 1 à 10, pour la fabrication de corps moulés.

14. Corps moulé fabriqué en utilisant un film polyester selon une ou plusieurs des revendications 1 à 10.